# EUROPÄISCHE PATENTANMELDUNG

(11) **EP 1 326 064 A1**
(43) Veröffentlichungstag der Anmeldung: **09.07.2003**
(21) Anmeldenummer: 02000445.3
(22) Anmeldetag: 08.01.2002
(51) Int. Cl.: G01J 5/60, G01J 5/54, G01J 5/00

(54) **Verfahren und Messgerät zum Kontrollieren der Qualität einer Prüfmasse**

(71) Anmelder: Florin, Christian, 6373 Ennetbürgen (CH)
(72) Erfinder: Florin, Christian, 6373 Ennetbürgen (CH)
(74) Vertreter: Hiebsch, Gerhard F., Dipl.-Ing.

(57) **Zusammenfassung**

Bei einem Verfahren zum Kontrollieren der Qualität einer Schweißnaht, einer Spritzschicht, eines thermischen Schnittes, eines Mikrogussteils als Prüfmasse während oder nach deren Herstellung, wird zur Kontrolle der Prüfmasse eine während des Herstellungsprozesses entstehende Strahlungsemission oder eine aufgetragener Energiestrahl zur Reflektion gebracht sowie diese mittels einer Infrarotkamera, die im Spektralbereich von 600 bis 2000 nm arbeitet, mit einem gekoppelten Rechner bearbeitet und als Bild oder Grafik spektral angezeigt.

## Beschreibung

Die Erfindung betrifft ein Verfahren sowie ein Messgerät zum Kontrollieren der Qualität einer Schweißnaht, einer Spritzschicht, eines thermischen Schnittes, eines Mikrogussteils als Prüfmasse während -- oder nach -- deren Herstellung. Zudem erfasst die Erfindung die Anwendung des Verfahrens und des Messgerätes.

Eine Fehlerkontrolle bezüglich Schlacken- oder Oxideinschlüsse, Poren, Fadenlunker od.dgl. Mängel nach dem jeweiligen Herstellungsprozess ist bekannt und wird seit Jahren mittels X-Ray-, Ultraschall-, Magnet- und Wirbelstromprüfungen zerstörungsfrei durchgeführt. Alle diese Verfahren sind für die Schweißnahtprüfung und die Kontrolle der Spritzschicht auf Bindung und Poren während des Schweiss- bzw. Spritzprozesses -- sowie für dessen Steuerung -- nicht zu verwenden.

Beim Gießen, besonders beim Stranggießen, wird eine Kontrolle der Erstarrung in der Kokille und im Strang nach einem Ultraschallprüfverfahren durchgeführt und damit der Gießprozess gesteuert, um ein Durchbrechen der Schmelze zu vermeiden. Dieses Verfahren wird in den letzten Jahren mit großem Erfolg beim Strangguss angewendet.

In Kenntnis dieses Standes der Technik hat sich der Erfinder die Aufgabe gestellt, eine Kontrolle von größeren Schweißnähten, aufgespritzten Flächen sowie Gussteilen während des Arbeitsvorganges zu ermöglichen; dies wäre aus Kosten- und Qualitätsgründen sehr interessant, da die auftretenden Fehler über eine gekoppelte Prozesssteuerung direkt korrigiert und so der Ausschuss auf ein Minimum gesenkt werden kann.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß wird zur Kontrolle der Prüfmasse eine während des Herstellungsprozesses entstehende Strahlungsemission oder ein aufgetragener Energiestrahl zur Reflektion gebracht sowie diese mittels einer -- im Spektralbereich von 600 bis 2000 nm arbeitenden -- Infrarotkamera mit einem gekoppelten Rechner bearbeitet und als Bild oder Grafik spektral angezeigt. Diese Messung kann während des Herstellungsprozesses oder nach dem Herstellungsprozess durchgeführt werden; die Reststrahlung des Prozesses wird erfindungsgemäß gemessen.

Als günstig hat es sich erwiesen, zum Messen einen gepulsten Laser aufzubringen. Auch kann zum Messen eine Gasentladung durchgeführt werden.

Bevorzugt soll der Spektralbereich der Infrarotkamera bei 700 bis 1500 nm liegen, vorzugsweise bei 780 bis 1200 nm. Als Sensor wird insbesondere ein Si Chip auf Co-Mo-Basis herangezogen.

Im Rahmen des erfindungsgemäßen Verfahrens liegt der Einsatz eines Arrays mit 512 x 512 Bildpunkten, welcher ein Ansteuern und Auslesen der einzelnen Bildpunkte oder Bildelemente mit hoher Dynamik von etwa 5 bis 15 KHz gestattet. Beim Arbeiten mit verschiedenen Bildpunktelementen aus demselben Array soll für jede Gruppe eine unterschiedliche spektrale Frequenz zur Datenerfassung eingesetzt werden.

Nach einem anderen Merkmal der Erfindung soll das Messgerät zur Online-Kontrolle der Nahtqualität und deren Ausbildung während des Schweißvorganges eingesetzt werden oder zur Online-Kontrolle der Schichtqualität und deren Ausbildung während des thermischen Spritzens.

Auch ist es denkbar, das Messgerät zur Kontrolle des Gießprozesses von Teilen sowie von Einschlüssen von Schlacken, Oxiden und anderen Fremdstoffen zu verwenden.

Die für das Verfahren erforderliche Infrarotkamera arbeitet -- wie gesagt -- im Spektralbereich von 600 bis 2000 nm, bevorzugt 780 bis 1200 nm, mit einem gekoppelten Rechner, der gegebenenfalls außerhalb der Kamera angeordnet ist. In die Kamera integriert ist der Prozessor.

Es wird also ein Verfahren angeboten, welches Kontrollen während des Schweißens, Spritzens oder beim Gießen erlaubt; zur Kontrolle wird die reflektierte Infrarotstrahlung des Schmelzbades, ein zusätzlich verwendeter Energiestrahl (z.B. gepulster Laserstrahl) oder eine andere Energiequelle verwendet.

Der Einsatz des beschriebenen Verfahrens ist vor allem in der Metallindustrie -- insbesondere im Stahlbereich -- vorgesehen. Es kann günstig bei der Erzeugung von Fahrzeugen und ihren Teilen eingesetzt werden.

Um Aussagen über die Lage bzw. Tiefe des Fehlers machen zu können, wird in dem erfindungsgemäßen Gerät als Sensor ein Si-Array mit 512 x 512 Bildelementen verwendet. Das Ansteuern und Auslesen des gesamten Arrays erfolgt mit einer Frequenz von 25 Hz, bei einem Vollbild in der Standversion, d.h. Abspeichern von Bildern und deren Bearbeitung.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1:: den Querschnitt eines Rohres mit achsparalleler Schweißnaht;
- Fig. 2:: drei Proben von Schweißnahtbereichen;
- Fig. 3:: eine Skizze zu drei verschiedenen Energiezufuhrbereichen;
- Fig. 4:: einen Schnitt durch einen Träger mit einer Schweißschicht;
- Fig. 5:: eine Messanordnung zum Messen einer Schweißnaht;
- Fig. 6:: den Querschnitt durch ein Pressmaul mit einem Rohr zwischen Press-Schweißrollen;
- Fig. 7:: Seitenansicht und Draufsicht einer Schweißstation;
- Fig. 8:: vier Seitenansichten von Rohren mit Fehlern;
- Fig. 9:: Messkurven zu einer Schweißnaht.

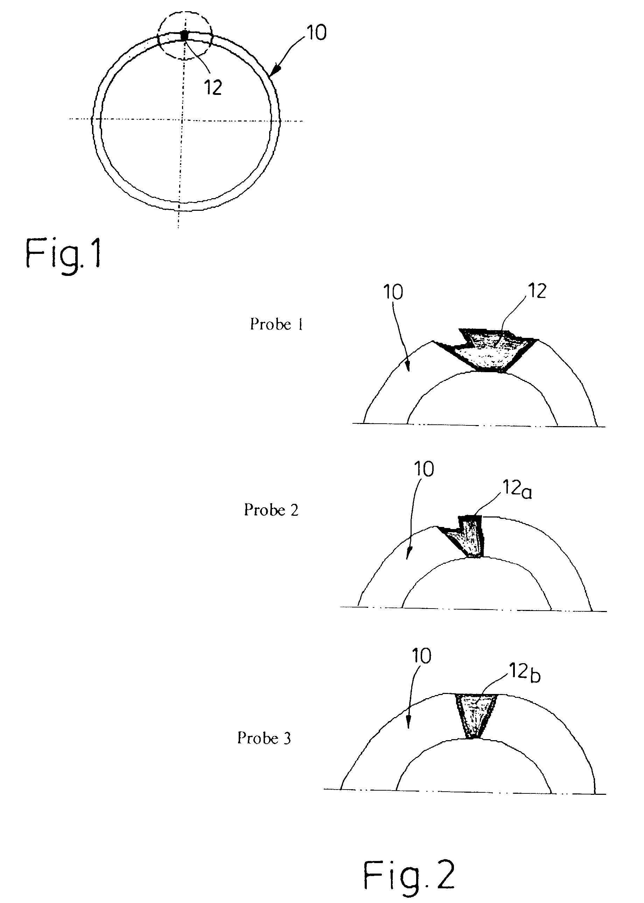

Ein Rohrkörper 10 ist gemäß Fig. 1 aus einem Blechstreifen geformt, welcher in der ersten Phase rundgewalzt und in der Folge entlang der offenen Seite bei 12 verschweißt worden ist. Während des Verschweißens wurde Material verflüssigt, so dass eine homogene Verschmelzung mit dem nicht aufgeschmolzenen Werkstoff erfolgt ist. Die zum Feststellen von Einschlüssen, Fehlern oder Inhomogenitäten in der Schweißnaht 12 untersuchten Proben nach Fig. 2 weisen unterschiedliche Schweißnahtformen auf.

Die Schweißnaht 12 der Probe 1 ist auf den beiden Seiten von unterschiedlicher Geometrie; eine der Seiten ist mit starker Kerbbildung versehen. Probe 2 ist eine einseitig angeordnete Schweißnaht 12ₐ, in deren Bereich eine ausgeprägte Kerbausbildung besteht. Probe 3 zeigt eine beidseitig geschweißte Naht 12_{b}, deren Ränder auf beiden Seiten kaum feststellbar sind.

Zur Kontrolle wurden auf den Proben Zonen markiert, welche einer IR-Inspektion unterzogen wurden. Bei den Messungen wurde in der ersten Phase ein Wärmeimpuls auf die markierte Zone übertragen. Das instationäre Verhalten des Wärmepulses wurde mit einer IR-Kamera aufgenommen, die Daten wurden auf einem Videoband abgespeichert.

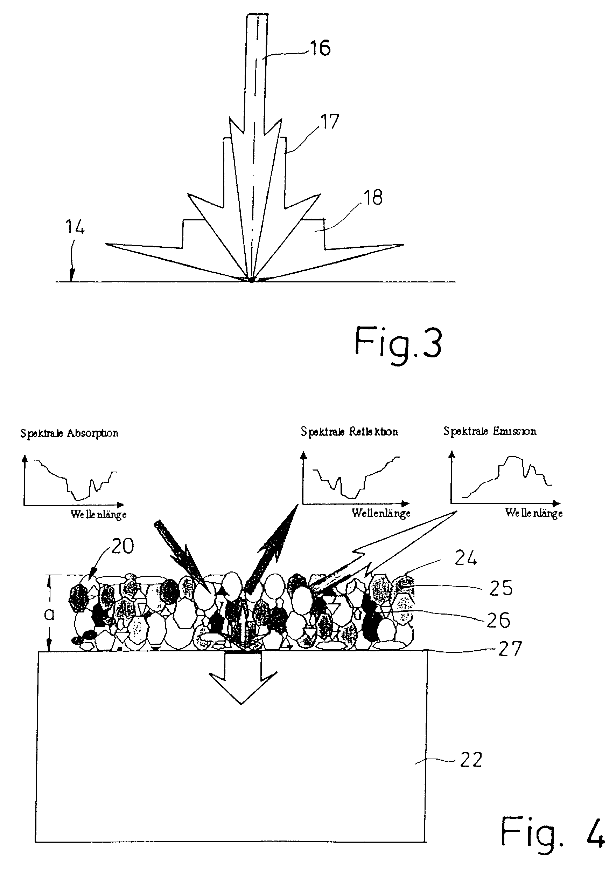

Fig. 3 bietet eine Übersicht zu verschiedenen Energieströmen an. Gelangt ein genügend hoher Energiestrom auf eine Oberfläche 14, so wird der Anteil der in das Material eindringenden Energie durch die Reflektion von der blanken Oberfläche geschwächt und gleichzeitig die Energie, die schnell in das Material eindringt, verdichtet. Der Anteil der eindringenden Energie erzeugt eine zeitlich und spektral veränderliche Spur, die zur Bewertung der erzeugten Qualität erfasst und ausgewertet wird.

Das Schema einer punktuellen Energiezufuhr ist in Fig. 3 mit 16, einer partiellen Energiezufuhr mit 17 sowie einer großflächigen Energiezufuhr mit 18 kenntlich gemacht.

Nach Fig. 4 wird auf der Oberflächenschicht 20 der Dicke a eines Trägers 22 die aufgezwungene Energie reflektiert und absorbiert. Transmission tritt nur im obersten Schichtbereich auf; mit 24 ist die Oberfläche bezeichnet, mit 25 der anschließende Bereich, mit 26 die Schichtmitte und mit 27 der Schichtboden.

Materialunterschiede zwischen dem Rohr- und dem Schweißgut werden durch eine andersartige Emission sichtbar und Unterschiede in der geometrischen Ausbildung der Schweißnaht durch wiederum andere Emissionen kenntlich, Fehler in der Schweißnaht durch eine zeitlich unregelmäßige Emission. Bei der Messanordnung ist der spektralen Eigenheit besondere Bedeutung beizumessen.

Die Infrarot-Messungen wurden mit einer NIR-Kamera vorgenommen, da deren Sensor eine hohe Dedektivität im gewünschten Spektralbereich aufweist.

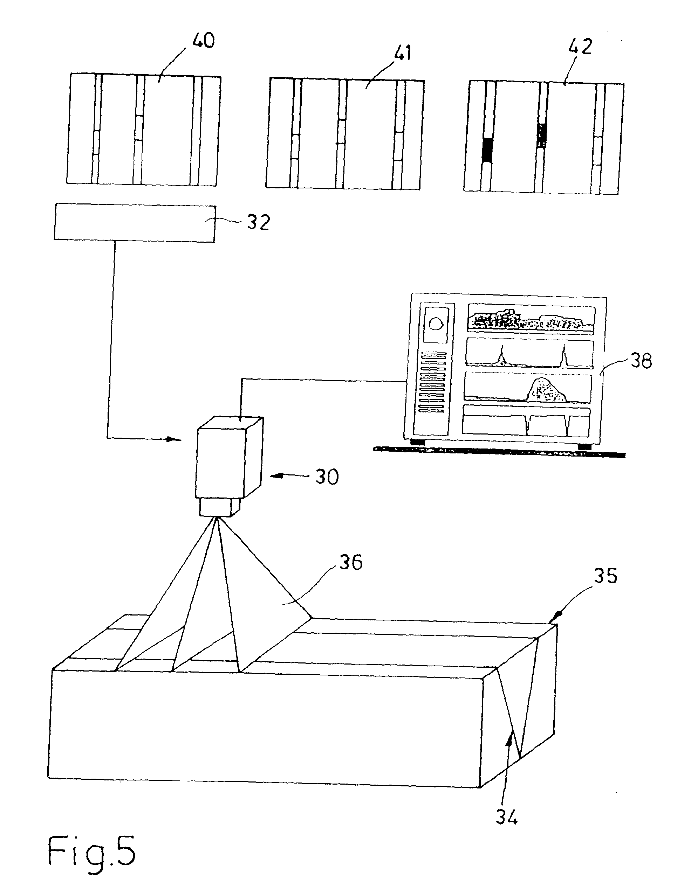

Fig. 5 zeigt eine Kamera 30 mit programmierbarem Prozessor 32, in die Kamera integriert sind ein Prozessor, die Optik und Filter. Die Kamera 30 ist über einem eine Schweißnaht 34 enthaltenden blockartigen Werkstück 35 angeordnet mit dazwischenliegender Messzone 36 der als Flächen dargestellten Spektralbereiche 1, 2, 3. Die Messresultate werden auf einem Bildschirm 38 angezeigt. Oberhalb der Kamera 30 ist links ein Datensatz 40 ohne Fehler zu erkennen, daneben ein Datensatz 41 mit partiellen Fehlerbereichen und rechts ein Differenzbild 42 zwischen den beiden Datensätzen 40, 41.

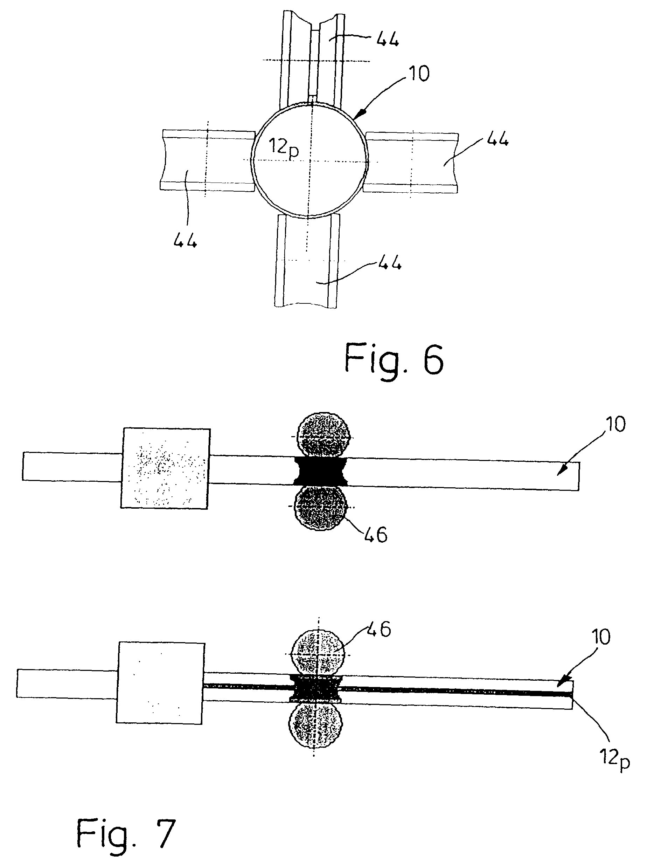

Die Fig. 6 und 7 geben die vollständige zweidimensionale Prüfung einer Schweißnaht 12ₚ beim Pressschweißen wieder, welche an einem Rohr 10 erzeugt worden ist. Mit 44 sind die Pressschweißrollen bezeichnet, bei 46 ist eine Induktionsspule wiedergegeben.

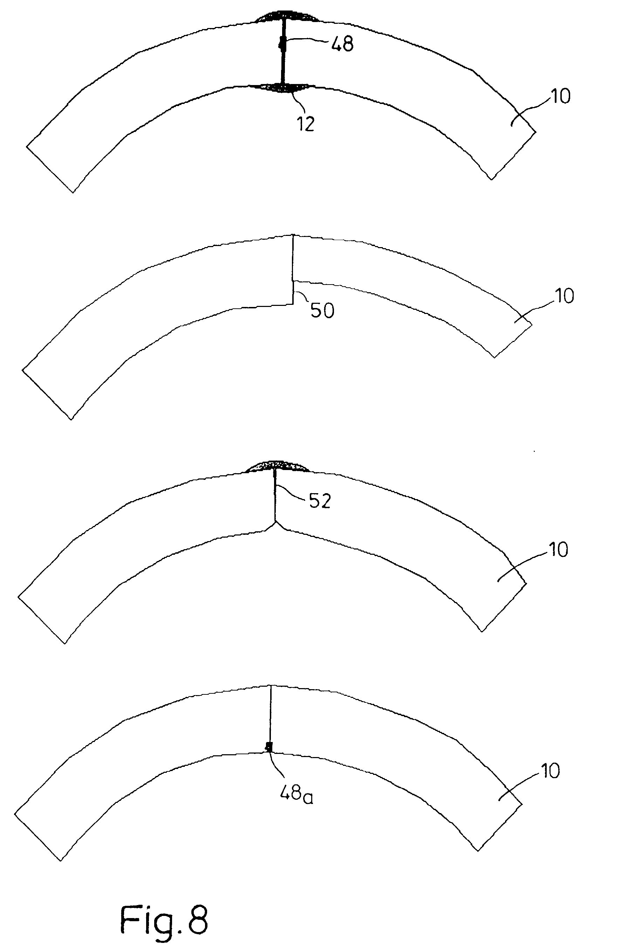

Der Fig. 8 sind in Ergänzung der Darstellungen in Fig. 2 weitere Fehlermöglichkeiten zu entnehmen, nämlich ein Oxideinschluss 48 in der Schweißnaht 12, ein Bandkantenversatz bei 50 auf der Innenseite, eine Störung 52 des Innenwulstes und ein Oxideinschluss 48ₐ auf der Innenseite der Schweißnaht 12.

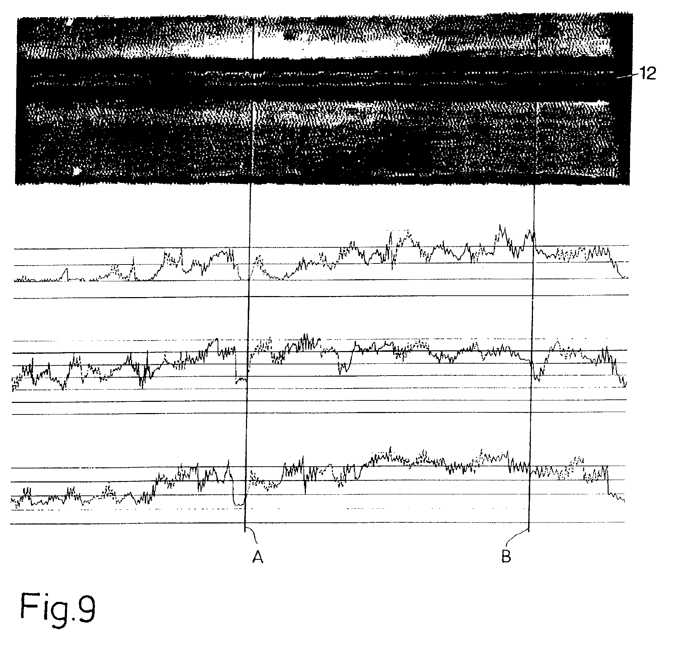

Fig. 9 bietet drei Messresultate entlang je einer Zeile auf der Schweißnaht 12 an. Die Signale sind in Längsrichtung am gleichen Ort erfasst und quer zur Schweißnaht 12 um je einen Bildpunkt verschoben. Dadurch werden Abweichungen der Strahlungseigenschaften sichtbar. Dazu wird auf dem Rohr eine Zone für detaillierte Messversuche ausgewählt. Die Zone ist auf der Probe mit B bezeichnet. Das Bild zeigt die markierte Zone mit 202 Zeilen. Unten ist die Grafik der Strahlungsprofile zur Zeile 55, 58 und 61 in der gesamten Länge (634 Spalten) abgebildet.

Das Verhalten der Abstrahlung variiert je nach Zeile unterschiedlich stark. Aus den Messdaten erkennt man unterschiedliche Reflektion - was auf verschiedenes Material zwischen dem Rohr und dem Schweißgut hindeutet, sowie die einseitig der Schweißnaht aufgetretene Kerbbildung. Die Ausbildung kleiner Längsrisse wird mit erhöhter geometrischer Auflösung und mit einem örtlichen Energiepuls sichtbar. Die Risse können eindeutig nachgewiesen werden.

Die strahlungstechnischen Abweichungen werden bewertet und liefern qualitätsrelevante Aussagen. Für die Charakterisierung der Signale werden die Daten der Zeilen und der Spalten in Funktion der Zeit bewertet. Festgestellt werden strahlungstechnische Abweichungen im Absorptions- und Emissionsverhalten am Messort. Die Ortsangaben -- geometrische Werte -- können direkt aus der Abbildung abgelesen werden.

Das Verhalten der Abstrahlung im Bereich der linken Linie A ist in Fig. 9 allen Zeilen ähnlich, im Gegensatz zur rechten Linie B, an der unter gleichen Bedingungen Abweichungen im Abstrahlungsverhalten festzustellen sind.

Aus den Messdaten erkennt man unterschiedliche Reflektion - - was auf verschiedenes Material zwischen dem Rohr und dem Schweißgut hindeutet -- sowie die einseitig der Schweißnaht aufgetretene Kerbbildung. Die Ausbildung kleiner Längsrisse wird mit erhöhter geometrischer Auflösung und mit einem örtlichen Energiepuls sichtbar. Die Risse können eindeutig nachgewiesen werden.

Für die Charakterisierung der Strahlungs-Signale werden die Daten der Zeilen und der Spalten bewertet sowie die zeitlich auftretenden strahlungstechnischen Abweichungen im Absorptions- und Emissionsverhalten am Messort festgestellt. Die Strahlungseigenschaften unter den Bedingungen während dem Schweißen -- gleichzeitig bestehende Phasenänderungen des Werkstoffes -- sind einfacher nachzuweisen und zu charakterisieren als unter den Bedingungen nach dem Schweißen.

Die für die Messungen eingesetzte Infrarotkamera 30 mit einem Si-Array als Sensor, der im Strahlungsbereich von 600 bis 2000 nm arbeitet, ist so aufgebaut, dass die einzelnen Bildpunkte spektral mit verschiedenen Abtastfrequenzen abgetastet werden können. Die unterschiedlichen Abtastfrequenzen erlauben es, beim Auftrennen in die einzelnen Frequenzen Bilder der verschiedenen Tiefen aufzuzeichnen.

Nachfolgend wird ein Beispiel für eine Aufteilung der Bildelemente im Array und die dazu gehörenden Frequenzen sowie deren Bildpunkte in Pixel vorgestellt:
- Auswahl von 3 Bildelementen mit jeweils 12 Pixel in der x-Achse und 3 Pixel in der y-Achse (12 x 5 x 3)
   Anzahl Bildpunkte 180
   Dynamik der Datenerfassung etwa 36 KHz
   d.h. die Abtastung des definierten Bildes benötigt 27,4 Mikrosekunden
- Auswahl von 8 Bildelementen mit jeweils 5 Pixel in der x-Achse und 5 Pixel in der y-Achse (5 x 5 x 8)
   Anzahl Bildpunkte 200
   Dynamik der Datenerfassung etwa 33 KHz
   d.h. die Abtastung des definierten Bildes benötigt 32,77 Mikrosekunden
- Auswahl von 1 Bildelement mit jeweils 5 Pixel in der x-Achse und 5 Pixel in der y-Achse (5 x 5 x 1)
   Anzahl der Bildpunkte 25
   Dynamik der Datenerfassung etwa 262 KHz
   d.h. die Abtastung des definierten Bildes benötigt 3,81 Mikrosekunden
- Auswahl von 1 Bildelement mit jeweils 2 Pixel in der x-Achse und 2 Pixel in der y-Achse (2 x 2 x 1)
   Anzahl Bildpunkte 4
   Dynamik der Datenerfassung etwa 1630 KHz
   d.h. die Abtastung des definierten Bildes benötigt 0,61 Mikrosekunden.

Durch die oben erläuterte Arbeitsweise eignet sich dieses Messgerät bzw. die Kamera besonders gut für die Messung von hochdynamischen Infrarotstrahlungsmessungen in der Produktion von thermischen Prozessen.

### BEISPIEL 1

In der Rohrproduktion werden Stahlbleche rund gedrückt, anschließend werden die Kanten durch Induktion auf etwa 1000°C erhitzt und zwischen den Pressrollen 44 so zusammengepresst, dass die zwei Blechenden miteinander verschweißen.

Die Aufgabe besteht darin, unsaubere Kanten, einen zu großen Spalt im Bereich der Erhitzung oder Oxideinschlüsse, die im Erhitzungsbereich entstehen, berührungslos zu erkennen und den Produktionsprozess vollständig zu dokumentieren.

Die Fehler sind auf der Innen- oder auf der Außenseite bei einer Produktionsgeschwindigkeit von 60 m/min festzustellen. Die Qualitätskontrolle bezieht sich auf beide Seiten.

## Patentansprüche

1. Verfahren zum Kontrollieren der Qualität einer Schweißnaht, einer Spritzschicht, eines thermischen Schnittes, eines Mikrogussteils als Prüfmasse während oder nach deren Herstellung,
**dadurch gekennzeichnet,**
**dass** zur Kontrolle der Prüfmasse eine während des Herstellungsprozesses entstehende Strahlungsemission oder ein aufgetragener Energiestrahl zur Reflektion gebracht sowie diese mittels einer Infrarotkamera, die im Spektralbereich von 600 bis 2000 nm arbeitet, mit einem gekoppelten Rechner bearbeitet und als Bild oder Grafik spektral angezeigt.

2. Verfahren nach Anspruch 1, **dadurch gekennzeichnet, dass** die Messung während des Herstellungsprozesses oder nach dem Herstellungsprozess durchgeführt wird.

3. Verfahren nach Anspruch 1, **dadurch gekennzeichnet, dass** zum Messen ein gepulster Laser aufgebracht oder dass zum Messen eine Gasentladung durchgeführt wird.

4. Verfahren nach Anspruch 1, **dadurch gekennzeichnet, dass** die Reststrahlung des Prozesses gemessen wird.

5. Verfahren nach einem der Ansprüche 1 bis 4, **gekennzeichnet durch** einen Spektralbereich der Infrarotkamera bei 700 bis 1500 nm, vorzugsweise 780 bis 1200 nm, wobei gegebenenfalls ein Si-Chip auf C-Mo-Basis als Sensor eingesetzt wird.

6. Verfahren nach einem der Ansprüche 1 bis 5, **gekennzeichnet durch** ein Array mit 512 x 512 Bildpunkten, mit welchem einzelne Bildpunkte oder Bildelemente mit hoher Dynamik von etwa 5 bis 15 KHz angesteuert und ausgelesen werden, wobei gegebenenfalls beim Arbeiten mit verschiedenen Bildpunktelementen aus demselben Array für jede Gruppe eine unterschiedliche spektrale Frequenz zur Datenerfassung eingesetzt wird.

7. Verfahren nach einem der Ansprüche 1 bis 6, **dadurch gekennzeichnet, dass** das Messgerät zur Online-Kontrolle der Nahtqualität und deren Ausbildung während des Schweißvorganges eingesetzt wird, oder dass das Messgerät zur Online-Kontrolle der Schichtqualität und deren Ausbildung während des thermischen Spritzens eingesetzt wird, oder dass das Messgerät zur Kontrolle des Gießprozesses von Teilen sowie von Einschlüssen von Schlacken, Oxiden und anderen Fremdstoffen eingesetzt wird.

8. Messgerät zum Kontrollieren der Qualität einer Schweißnaht, einer Spritzschicht, eines thermischen Schnittes, eines Mikrogussteils als Prüfmasse insbesondere zur Durchführung des Verfahrens nach wenigstens einem der voraufgehenden Ansprüche, **gekennzeichnet durch** eine Infrarotkamera (30) mit einem Spektralbereich von 60 bis 2000 nm und einem gekoppelten Rechner.

9. Messgerät nach Anspruch 8, **gekennzeichnet durch** einen Spektralbereich von 700 bis 1500 nm, vorzugsweise 780 bis 1200 nm, und/oder **durch** einen Si-Chip auf C-Mo-Basis als Sensor.

10. Messgerät nach Anspruch 8 oder 9, **dadurch gekennzeichnet, dass** der Rechner außerhalb der Kamera (30) angeordnet ist.

11. Messgerät nach einem der Ansprüche 8 bis 10, **gekennzeichnet durch** einen in die Kamera integrierten Prozessor.

12. Messgerät nach einem der Ansprüche 8 bis 11, **gekennzeichnet durch** einen Array mit 512 x 512 Bildpunkten.

13. Verwendung des Verfahrens und/oder des Messgerätes nach wenigstens einem der voraufgehenden Patentansprüche in der Metallindustrie, insbesondere der Stahlindustrie, und/oder beim Herstellen von rohrartigen Hohlprofilen.

14. Verwendung des Verfahrens und/oder des Messgerätes nach wenigstens einem der Patentansprüche 1 bis 12 in der Fahrzeugindustrie, insbesondere beim Herstellen von Land- oder Luftfahrzeugen und deren Teilen.
